# EUROPÄISCHE PATENTSCHRIFT

(11) **EP 0 968 950 B1**
(45) Veröffentlichungstag und Bekanntmachung des Hinweises auf die Patenterteilung: **05.06.2002**
(21) Anmeldenummer: 99117749.4
(22) Anmeldetag: 25.09.1996
(51) Int. Cl.: B65H 51/22, D03D 47/34, D04B 15/48

(54) **Sensorvorrichtung, insbesondere für eine Liefervorrichtung von fadenartigem Wickelmaterial**
Sensing apparatus , especially for a feeding device for a thread-type winding material
Appareil de détection , particulièrement pour un dispositif d'alimentation pour un matériau à enrouler de type fil

(30) Priorität: 26.09.1995 DE 19535756
(43) Veröffentlichungstag der Anmeldung: 05.01.2000
(62) Teilanmeldung aus: 96942250.0
(73) Patentinhaber: ROSER, Erich, D-88699 Frickingen (DE)
(72) Erfinder: Roser, Erich, 88699 Frickingen (DE); Schnebel, Gerhard, 77743 Neuried (DE)
(74) Vertreter: Patentanwälte Eisele, Otten, Roth & Dobler

(56) Entgegenhaltungen:
- WO-A-93/06283
- DE-B- 1 903 133
- DE-C- 3 326 433
- GB-A- 1 100 077
- GB-A- 2 253 216

## Beschreibung

Die Erfindung betrifft eine Sensorvorrichtung nach dem Oberbegriff des Anspruchs 1.

Fadenliefervorrichtungen für Textilmaschinen sind in vielfältiger Form bereits bekannt geworden. Man unterscheidet unter anderem zwei Arten von Fadenliefervorrichtungen, zum einen sogenannte Speicherfournisseure und zum anderen sogenannte Positivfournisseure. Ein Positivfournisseur ist mit einer Sensoreinheit ausgestattet, die über einen Antriebsmotor einen Fadenwickel mit steuerbarer Geschwindigkeit abwickeln kann. Über die Sensorvorrichtung wird die Fadenspannung des abgewickelten Fadens möglichst konstant auf eine voreingestellte Fadenspannung eingestellt.

Mit der Druckschrift GB 1 100 077 ist eine Sensorvorrichtung zur Meßung einer Fadenspannung bekannt geworden, die ein beweglich angeordnetes Halbleiterelement umfaßt, das mit einer Fadenführung in Verbindung steht. Das Halbleiterelement beeinflußt ein durch stationäre Permanentmagnete erzeugtes Magnetfeld, dessen Änderungen durch einen Hallsensor erfaßt werden.

Eine weitere Sensorvorrichtung eines Positivfournisseurs ist beispielsweise mit der gattungs bildenden EP 06 05 464 bekannt geworden. Hierbei wird der Faden durch eine trompetenartig gewundene, horizontal stehende Spiralfeder gefädelt, die drehbar an einer vertikalen Drehachse befestigt ist. Am anderen Ende der Drehachse befindet sich ein Permanentmagnet, der durch ein U-förmiges Weicheisenjoch in seiner Nullpunktslage gehalten wird. Die Drehbewegungen des Permanentmagneten werden über einen Hallsensor erfaßt. Diese Vorrichtung erzeugt nicht in allen Anwendungsfällen die gewünschte konstante Fadenspannung. Insbesondere bei ruckartigen Fadenbewegungen zeigt diese Vorrichtung ein Eigenschwingungsverhalten, das sich im Meßsignal des Hallsensors widerspiegelt und somit die Regelung einer konstanten Fadenspannung stört.

Bei Textilmaschinen mit stark schwankendem Fadenverbrauch, insbesondere bei ruckartigem Fadenverbrauch, der extreme Fadenbeschleunigung verursacht, sind solche Positivfournisseure bislang nicht verwendbar. Derartige extreme Fadenbeschleunigungen treten beispielsweise beim Fangen eines losen Fadenendes auf. Solche losen Fadenenden finden sich bei vielfältigen Textilmaschinen, die kurzzeitig nicht benötigte Fäden abschneiden und deren Enden dann wieder einfangen, wenn diese Fäden weiterverarbeitet werden sollen. In solchen Anwendungsfällen werden sogenannte Speicherfournisseure eingesetzt, wobei die Fadenspannung durch im wesentlichen mechanisch aufgebaute Fadenbremsen geregelt wird.

Derartige Liefervorrichtungen werden nicht nur im Bereich der Textilfertigung, sondern allgemein bei der Verarbeitung von fadenartigem Wickelmaterial, wie Textilfäden, Fasern, insbesondere Glasfasern oder Kohlefasern, Drähten, insbesondere von Feinstkupferlackdrähten für die Wicklung elektromagnetischer Spulen, oder dergleichen verwendet. Sie sind immer dann von Vorteil, wenn ein solches Material mit möglichst konstanter Materialspannung einer Verarbeitungsmaschine zugeführt werden soll.

Bei den mechanisch aufgebauten Fadenbremsen sind nach wie vor erhebliche Schwankungen in der Fadenspannung vorhanden, was insbesondere in der Verarbeitung dünne Fäden Probleme aufwirft.

Aufgabe der Erfindung ist es daher, eine Sensorvorrichtung vorzuschlagen, mit der eine bessere Regelung der Fadenspannung möglich ist.

Dies wird erfindungsgemäß ausgehend von einer Sensorvorrichtung der einleitend genannten Art durch die kennzeichnenden Merkmale des Anspruchs 1 erreicht.

Durch die in den Unteransprüchen genannten Maßnahmen sind vorteilhafte Weiterbildungen und Ausführungen der Erfindung möglich.

Dementsprechend wird eine solche Sensorvorrichtung vorteilhafterweise mit einem Hallsensor versehen, in dessen Nähe sich wenigstens ein mit einer Materialführung in Verbindung stehender Magnet befindet. Es hat sich überraschenderweise gezeigt, daß das Schwingungsverhalten einer solchen Sensoreinheit gegenüber der bekannten Sensorvorrichtung mit magnetischer Rückstellung wie einleitend zum Stand der Technik beschrieben positiv beeinflußt wird, wenn der genannte Magnet mit einem mechanischen Rückstellelement versehen ist.

Als Rückstellelemente kommen beispielsweise alle Arten von Federelementen oder elastischen Körpern in Frage, wobei sich in einer vergleichsweise einfachen und leichten Bauweise der Einsatz einer Blattfeder bewährt hat. An einer Blattfeder kann der Magnet z.B. mittels eines Halterungskörpers starr befestigt werden. Hierdurch ist zudem unmittelbar ein fester Abstand des Magneten zu dem Hallsensor erreichbar.

Weiterhin hat es sich als vorteilhaft erwiesen, als Materialführung eine einfache Öse zu verwenden, die über einen Haltestift mit dem oben genannten Magneten bzw. dessen Halterungskörper in Verbindung steht. Die genannte Öse stellt eine besonders leichte Art der Materialführung dar, wodurch wiederum das Schwingungsverhalten der Sensorvorrichtung positiv beeinflußt wird.

Die bereits mehrfach genannten Schwingungen der Sensorvorrichtung sind an sich unerwünscht, werden jedoch in jedem rückstellenden Bauelement durch mechanische Einwirkung hervorgerufen. Sie erzeugen ein Signal, das dem effektiv zu messenden Signal überlagert ist. Insbesondere dann, wenn die Materialspannung in sehr kurzen Zeitintervallen, d.h. in Zeitintervallen in der Größenordnung der Schwingungsdauer der genannten Schwingungen nachgeregelt werden muß, verfälschen diese Schwingungen das "echte" Signal derart, daß Schwankungen in der Materialspannung auftreten.

Außer den oben genannten Maßnahmen zur Beeinflußung des Schwingungsverhaltens der Sensorvorrichtung empfiehlt es sich in einer besonderen Ausführungsform, die beschriebene Anordnung doppelt vorzusehen. Hierdurch ist es möglich, Schwingungen oder sonstige Bewegungen, die beide Sensoren gleichermaßen durchführen, in einer nachgeschalteten Auswerteelektronik zu kompensieren. Hierdurch ist insbesondere die Einbaulage der Sensorvorrichtung variabel, da gleiche Bewegungen beispielsweise durch das Eigengewicht aufgrund der Erdanziehung, unmittelbar kompensiert werden.

Vorzugsweise werden beide Sensoranordnungen magnetisch gekoppelt. Es ergibt sich hierdurch ein gemeinsames Schwingungsverhalten aufgrund einwirkender mechanischer Impulse, die z.B. in Form von Eigenschwingungen einer Wirkoder Strickmaschine vorliegen können. Auf diese Weise werden auch die Eigenschwingungen beider Sensoranordnungen synchronisiert, d.h. sie werden bevorzugt mit der gleichen Auslenkungsrichtung und weitgehend in Phase zueinander angeregt.

Die Magnete bzw. die entsprechenden Hallsensoren sind dabei so gepolt, daß nur eine gegensätzliche Auslenkung zwei positive Meßspannungen erzeugt. Somit werden bei solchen Störungen wie Eigenschwingungen bzw. Schwingungen aufgrund äußerer mechanischer Impulse durch die magnetische Kopplung beider Sensoranordnungen die Schwingungssignale der Störungen unmittelbar kompensiert. Sollten trotz der magnetischen Kopplung gegenläufige Schwingungen auftreten, so werden diese vorteilhafterweise elektronisch gefiltert.

Vorzugsweise wird dementsprechend die Führung des fadenartigen Wickelmaterials so vorgesehen, daß die beiden Sensoranordnungen in entgegengesetzte Richtungen ausgelenkt werden. Da, wie oben angeführt, die Anordnung so getroffen wurde, daß in diesem Fall zwei positive Meßspannungen erzielt werden, kann das Summensignal beider Hallsensoren als Größe für die aktuelle Materialspannung verwendet werden. Die gesamte Sensoranordnung kann unmittelbar auf der Leiterplatte befestigt werden, wobei es sich empfiehlt, zwischen der Elektronik, die die Hallsensoren beinhaltet, und den Magneten ein nichtmagnetisches dünnes Gehäuse als Schmutzabschirmung anzubringen. Die Signale der ausgelenkten Magnete sind von den Hallsensoren durch dieses Gehäuse hindurch abgreifbar.

In einer besonderen Ausführungsform werden die Hallsensoren und die Magnete durch ein magnetisches Gehäuse magnetisch z.B. gegenüber dem Antriebsmotor abgeschirmt.

Vorzugsweise wird der Nullableich sowie die Empfindlichkeit jeder Sensoreinheit getrennt regelbar ausgebildet. Die Nullpunktslage jedes Sensors kann unabhängig von seiner tatsächlichen Nullpunktslage, die von der Position des Magneten über dem Hallsensor abhängt, durch elektronischen Abgleich verstellt und einjustiert werden.

Da in der oben angeführten Sensorvorrichtung die Auswertung des Summensignals beider Sensoranordnungen von Vorteil ist, empfiehlt es sich, die Verstärkung dieses Summensignals ebenfalls regelbar auszubilden.

Durch die angeführten Justiermöglichkeiten ist es somit möglich, das resultierende Spannungssignal unmittelbar auf die Größe der Spannung des fadenartigen Wickelmaterials zu eichen.

Das unmittelbare Anbringen der Magneten an den genannten Blattfedern hat zwar das Schwingungsverhalten der Anordnung positiv beeinflußt, jedoch besteht bei größeren Auslenkungen die Gefahr, daß die Federn überdehnt werden und somit nicht mehr exakt in ihre Nullpunktslage zurückfedern. In einem solchen Fall muß dann über die oben genannte Nullpunktsjustage die Sensorvorrichtung elektronisch nachjustiert werden.

Um diesen zusätzliche Justageaufwand zu reduzieren, empfiehlt es sich, einen weiteren Magneten zwischen den beiden genannten Sensormagneten als Kopplungsmagneten drehbar aufzuhängen. Dieser Magnet ist an einer in seiner Drehachse befindlichen Drehstange befestigt, an deren freien Ende ein Doppelhebel angebracht ist. An jeweils einem Ende des Doppelhebels wird eine Materialführung angebracht, so daß bei einer Veränderung der Materialspannung dieser Kopplungsmagnet gedreht wird. Beim Drehen dieses Kopplungsmagneten werden über magnetische Wechselwirkung die beiden Sensormagneten in entgegengesetzte Richtungen ausgelenkt. Die durch magnetische Kopplung zwischen Materialführung und Sensormagneten erzeugte Kraft ist nach oben beschränkt, so daß ein Überdehnen der Federelemente, an denen die Sensormagneten unmittelbar befestigt sind, verhindert ist.

Um den drehbaren Kopplungsmagneten wieder in seine Ausgangslage zurückzustellen, empfiehlt es sich, ein Rückholelement, z.B. in Form einer Spiralfeder, vorzusehen. Eine solche Rückholfeder kann in einer besonderen Ausführungsform mit einer verstellbaren Vorspannung versehen werden, so daß die gewünschte Materialspannung auch mechanisch über die Vorspannung dieser Rückholfeder beeinflußbar ist.

Vorzugsweise wird zusätzlich ein justierbarer Nullpunktsanschlag für die exakte Justage der Nullpunktslage des drehbar aufgehängten Magneten vorgesehen.

In einer weiteren Ausführungsform der Erfindung wird eine Schnittstelle vorgesehen, mittels der die oben angeführten verschieden verstellbaren Parameter oder weitere Größen einprogrammierbar sind. Auch der automatische Wechsel zwischen den beiden beschriebenen Betriebsmodi wäre denkbar. Da bei großen Verarbeitungsmaschinen, z.B. großen Textilverarbeitungsmaschinen eine Vielzahl der beschriebenen Liefervorrichtungen benötigt werden, wäre unter Umständen auch der Einsatz einer busfähigen Version von Vorteil. In diesem Fall ergibt sich eine enorme Flexibilität für den Austausch derartiger Liefergeräte bzw. für das zusätzliche Anbringen oder Entfernen von Liefervorrichtungen. An der Verarbeitungsmaschine muß lediglich ein entsprechendes Halterungssystem mit Busschnittstellen an verschiedenen Orten vorgesehen werden. Die Liefervorrichtungen können sodann ganz nach Belieben ein- und ausgesteckt werden, wobei sie über einen zentralen Rechner erkannt und gesteuert werden. Eine erheblich einfachere Methode der Fernbedienung besteht darin, daß über einen I/O-Port eines Rechners einfache Spannungsoder Stromsignale einer erfindungsgemäßen Liefervorrichtung zugeführt werden.

Ein Ausführungsbeispiel der Erfindung ist in der Zeichnung dargestellt und wird anhand der Figuren nachfolgend näher beschrieben.

Im einzelnen zeigen
- Fig. 1: eine schematische Schnittdarstellung durch eine Sensorvorrichtung gemäß der Erfindung,
- Fig. 2: eine Draufsicht auf eine Sensorvorrichtung gemäß Fig. 1,
- Fig. 3: eine weitere Ausführungsform einer Sensorvorrichtung in geschnittener Darstellung und
- Fig. 4: eine Darstellung eines weiteren Ausführungsbeispiels der Sensorvorrichtung gemäß Fig. 3.

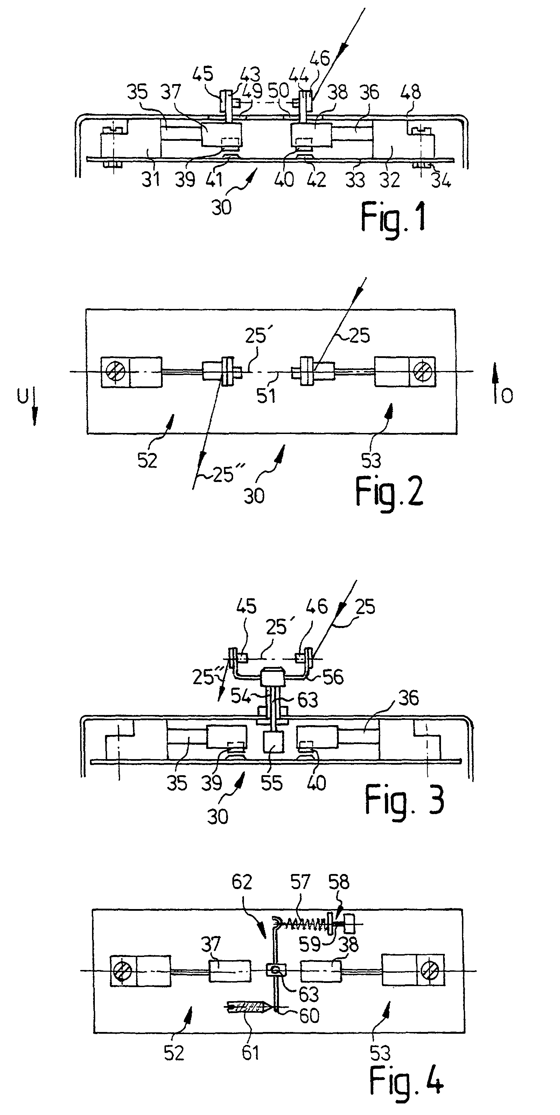

In den Figuren 1 bis 4 sind verschiedene Ausführungsformen einer erfindungsgemäßen Sensorvorrichtung 30 dargestellt. Zwei Befestigungselemente 31, 32 sind auf einer Leiterplatte 33 beispielsweise über Schraubverbindungen 34 befestigt. In den Befestigungselementen 31, 32 sind jeweils eine Blattfeder 35, 36 befestigt, z.B. eingespannt oder eingegossen. Am anderen Ende der Blattfedern 35, 36 befindet sich jeweils ein Halterungskörper 37, 38, in die jeweils ein Magnet 39, 40 eingearbeitet ist. Die Magnete 39, 40 sind über die Blattfedern 35, 36 in einem festen Abstand a oberhalb von zwei Hallsensoren 41, 42, die sich auf der Leiterplatte 33 befinden, angeordnet. Auf der Oberseite der Halterungskörper 37, 38 sind zwei Ösenstifte 43, 44 befestigt, in die jeweils eine Führungsöse 45, 46 eingesteckt ist. Zwischen den Magneten 39, 40 und den Hallsensoren 41, 42 kann eine dünne nichtmagnetische Abdeckung (nicht näher dargestellt) als Schutz gegen Verschmutzung angebracht werden. Weiterhin können die Hallsensoren 41, 42 und die Magneten 39, 40 durch ein magnetisches Gehäuse (ebenfalls nicht dargestellt) insbesondere gegenüber dem einen eventuell an der entsprechenden Fadenliefervorrichtung vorhandenen Motor abgeschirmt werden. Die gesamte Anordnung ist über einem Gehäusedeckel 48 abgedeckt, der entsprechende Öffnungen 49, 50 für die Ösenstifte 43, 44 aufweist.

Die Fadenführung des in die Sensorvorrichtung 30 einlaufenden Fadens 25 ist insbesondere in Fig. 2 erkennbar. Der Faden 25, der schräg einläuft, wird durch die Führungsöse 46 gefädelt und verläuft sodann 25' auf der Verbindungsachse 51 zwischen den beiden Sensoranordnungen 52, 53. Er ist wiederum durch die zweite Führungsöse 45 durchgefädelt, wird umgelenkt und in schräger Richtung abgeführt. Es leicht ersichtlich, daß beim Zug in Abzugsrichtung 25'' die Sensoranordnung 52 in Richtung des Pfeils U, hingegen die Sensoranordnung 53 in Richtung des Pfeils O ausgelenkt wird.

Die Magnete 39, 40 der Sensoranordnungen 52, 53 sowie die entsprechenden Hallsensoren 41, 42 sind so angeordnet, jeder Hallsensor 41, 42 genau bei dieser gegenläufigen Auslenkung ein positives Spannungssignal liefert. Hierdurch ist es möglich, ein Summensignal für die Erkennung der Fadenspannung auszuwerten, wobei Signale aus gleichgerichteten Auslenkungsrichtungen der beiden Sensoranordnungen 52, 53 gegenseitig kompensiert werden.

Über die Blattfedern 35, 36 ist ein fester Abstand a der Magnete 39, 40 zum jeweiligen Hallsensor 41, 42 ohne großen Aufwand möglich. Die unmittelbare Befestigung der Magnete 39, 40 an den Blattfedern 35, 36 führt zu einem verbesserten Schwingungsverhalten und reduziert damit störende Schwingungssignale.

Im Ausführungsbeispiel gemäß Fig. 3 sind die Führungsösen 45, 46 an einem Doppelhebel 56 befestigt, der in der Mitte um eine vertikale Drehachse 63 in einer Führungshülse 54 drehbar gelagert ist. An ihrer freien Seite ist an der Drehachse 63 ein weiterer Magnet 55 als Kopplungsmagnet befestigt.

Die Fadenführung 25, 25', 25'' (in dieser Darstellung perspektivisch angedeutet) ist identisch mit dem vorgenannten Ausführungsbeispiel. Bei einem Fadenzug in Richtung der Abzugsrichtung 25'' dreht sich somit der Magnet 55 mitsamt dem Doppelhebel 56, da er mit diesem über die Drehachse 63 verbunden ist. Die Magnete 39, 40 sind so gepolt und angeordnet, daß bei einer Verdrehung des Kopplungsmagneten 55 wiederum eine gegenläufige Auslenkung der beiden übrigen Magneten 39, 40 ausgelöst wird. Dieses Ausführungsbeispiel hat den Vorteil, daß die beiden Magneten 39, 40 bzw. deren zugeordnete Blattfedern 35, 36 nicht über einen kritischen Punkt hinaus ausgelenkt werden können. Die Blattfedern 35, 36 sind somit vor Überdehnung geschützt.

In der Ausführung gemäß Fig. 4 ist die Drehachse 63 mit einem zweiten Doppelhebel 64 versehen, der unterhalb des Doppelhebels 56 angeordnet ist, der in der dargestellten Zeichnungsebene nicht sichtbar ist.

An dem zweiten Doppelhebel 64 ist eine Zugfeder 57 befestigt, die an ihrem anderen Ende in einer Federhalterung 58 gehaltert ist. Die Federhalterung 58 ist über eine Spindel 59 verstellbar. Das freie Ende 60 des Doppelhebels 64 schlägt an einen verstellbaren Anschlag 61 an.

Die Zugfeder 57 ist nicht zwangsläufig für die Rückstellung des Doppelhebels 56 mit daran befestigten Ösen 45 und 46 notwendig, da sich der Kopplungsmagnet 55 bevorzugt in der direkten Verbindung zwischen Magneten 39, 40 ausgerichtet anordnet. Mit der Zugfeder 57 kann vielmehr die Rückstellkraft deutlich erhöht werden, wodurch bei gleichbleibender Sensibilität der Sensoranordnungen 52, 53 die Fadenspannung des Fadens 25 erhöht wird. Durch Verstellung der Federhaltung 58 über die Spindel 59 ist die Fadenspannung mechanisch grob in einem größeren Bereich einstellbar, als dies ohne die Zugfeder 57 möglich wäre. Der Anschlag 61 dient hierbei für ein Fixierung des tatsächlichen Nullpunkts der Drehmechanik 62 des Kopplungsmagneten 55, die sich aus Drehachse 54, sowie den Doppelhebeln 56, 64 zusammensetzt. Die Feinjustage der Nullpunktslage wird wie oben angeführt durch elekronische Nullpunktsjustage der Ausgangssignale der Hallsensoren 41, 42 durchgeführt.

Abgesehen von dem geschilderten Ausführungsbeispiel sind noch vielfältige Ausführungsformen einer erfindungsgemäßen Sensorvorrichtung 30 denkbar. Wesentlich ist, daß durch die Rückstellung wenigstens eines Magneten 39, 40 über wenigstens einem Hallsensor 41, 42 mittels eines mechanischen Rückstellelements 35, 36 das Schwingungsverhalten gegenüber bekannten Vorrichtungen erheblich verbessert wurde.

### Bezugszeichenliste:

- 30.: Sensorvorrichtung
- 31.: Befestigungselement
- 32.: Befestigungselement
- 33.: Leiterplatte
- 34.: Schraubverbindung
- 35.: Blattfeder
- 36.: Blattfeder
- 37.: Halterungskörper
- 38.: Halterungskörper
- 39.: Magnet
- 40.: Magnet
- 41.: Hallsensor
- 42.: Hallsensor
- 43.: Ösenstifte
- 44.: Ösenstifte
- 45.: Führungsöse
- 46.: Führungsöse
- 48.: Gehäusedeckel
- 49.: Öffnung
- 50.: Öffnung
- 51.: Verbindungsachse
- 52.: Sensoranordnung
- 53.: Sensoranordnung
- 54.: Führungshüls
- 55.: Kopplungsmagnet
- 56.: Doppelhebel
- 57.: Zugfeder
- 58.: Federhalterung
- 59.: Spindel
- 60.: freies Ende
- 61.: verstellbarer Anschlag

- 62.: Drehmechanik
- 63.: Drehachse
- 64.: Doppelhebel

## Patentansprüche

1. Sensorvorrichtung (30), insbesondere für eine Fadenliefervorrichtung, mit wenigstens einem Hallsensor (41, 42), **dadurch gekennzeichnet, daß** wenigstens ein mit einer Materialführung (45, 46) und mit einem mechanischen Rückstellelement (35, 36) in Verbindung stehender Magnet (39, 40) in der Nähe des Hallsensors (41, 42) vorgesehen ist.

2. Sensorvorrichtung nach Anspruch 1, **dadurch gekennzeichnet, daß** als Rückstellelement eine Blattfeder (35, 36) vorgesehen ist.

3. Sensorvorrichtung nach einem der vorgenannten Ansprüche, **dadurch gekennzeichnet, daß** als Materialführung eine Führungsöse (45, 46) vorgesehen ist.

4. Sensorvorrichtung nach einem der vorgenannten Ansprüche, **dadurch gekennzeichnet, daß** zwei Sensoranordnungen (52, 53) mit jeweils wenigstens einem Hallsensor (41, 42) und jeweils wenigstens einem an jeweils wenigstens einer Blattfeder (35, 36) befestigten Magneten (39, 40) vorgesehen sind.

5. Sensorvorrichtung nach einem der vorgenannten Ansprüche, **dadurch gekennzeichnet, daß** wenigstens zwei Magneten (31, 40) magnetisch gekoppelt sind.

6. Sensorvorrichtung nach einem der vorgenannten Ansprüche, **dadurch gekennzeichnet, daß** eine magnetische Abschirmung um den Magneten (39, 40) und den jeweiligen Hallsensoren (41, 42) herum vorgesehen ist.

7. Sensorvorrichtung nach einem der vorgenannten Ansprüche, **dadurch gekennzeichnet, daß** der Nullabgleich sowie die Einstellung der Empfindlichkeit getrennt für jede Sensoranordnung (52, 53) durchführbar ist.

8. Sensorvorrichtung nach einem der vorgenannten Ansprüche, **dadurch gekennzeichnet, daß** die Magneten (39, 40) sowie die zugehörigen Hallsensoren (41, 42) so angeordnet sind, daß jede Sensoranordnung (52, 53) bei gegenläufiger Auslenkung ein Spannungsignal mit gleichem Vorzeichen liefert, so daß das Summensignal beider Sensoranordnungen (52, 53) als signifikante Größe für die Spannung des fadenartigen Wickelmaterials verwertbar ist und daß die Verstärkung des Summensignals einstellbar ist.

9. Sensorvorrichtung nach einem der vorgenannten Ansprüche, **dadurch gekennzeichnet, daß** ein weiterer Magnet (55) als Kopplungsmagnet zwischen den Sensoranordnungen (52, 53) vorgesehen ist.

10. Sensorvorrichtung nach einem der vorgenannten Ansprüche, **dadurch gekennzeichnet, daß** der Kopplungsmagnet (55) drehbar mit einer Drehachse (63) ausgebildet ist, an der die Führungselemente (45, 46) befestigt sind.

11. Sensorvorrichtung nach einem der vorgenannten Ansprüche, **dadurch gekennzeichnet, daß** ein verstellbares Rückstellelement (57) vorgesehen ist, gegen dessen Rückstellkraft der Kopplungsmagnet (55) verdrehbar ist.

12. Sensorvorrichtung nach einem der vorgenannten Ansprüche, **dadurch gekennzeichnet, daß** ein Nullpunktsanschlag (61) für die mechanische Nullpunktsjustage des Kopplungsmagneten (55) vorgesehen ist.

13. Liefervorrichtung für die Zulieferung von fadenartigem Wickelmaterial, wie Textilfäden, Fasern, Drähte oder dergleichen zu entsprechenden Verarbeitungsmaschinen, insbesondere für Textilmaschinen wie Strick- und Wickelmaschinen, **dadurch gekennzeichnet, daß** eine Sensorvorrichtung (30) zur elektronischen Regelung der Materialspannung in der Materialabzugsvorrichtung (15) nach einem der vorgenannten Ansprüche vorgesehen ist.

## Claims

1. Sensor apparatus (30) in particular for a thread feed device, with at least one Hall sensor (41, 42), **characterised in that** at least one magnet (39, 40) connected to a material guide (45, 46) and to a mechanical restoring element (35, 36) is provided in the vicinity of the Hall sensor (41, 42).

2. Sensor apparatus according to claim 1, **characterised in that** a leaf spring (35, 36) is provided as restoring element.

3. Sensor apparatus according to any of the preceding claims, **characterised in that** a guiding eye (45, 46) is provided as material guide.

4. Sensor apparatus according to any of the preceding claims, **characterised in that** two sensor arrangements (52, 53) are each provided with at least one Hall sensor (41, 42) and at least one magnet (39, 40) fastened to at least one respective leaf spring (35, 36).

5. Sensor apparatus according to any of the preceding claims, **characterised in that** at least two magnets (31, 40) are magnetically coupled.

6. Sensor apparatus according to any of the preceding claims, **characterised in that** a magnetic screen is provided around the magnets (39, 40) and the respective Hall sensors (41, 42).

7. Sensor apparatus according to any of the preceding claims, **characterised in that** the zero compensation and the adjustment of the sensitivity can be carried out separately for each sensor arrangement (52, 53).

8. Sensor apparatus according to any of the preceding claims, **characterised in that** the magnets (39, 40) and the associated Hall sensors (41, 42) are arranged in such a way that each sensor arrangement (52, 53) supplies a tension signal with the same prefix upon deflection in the opposite direction, so the summation signal of both sensor arrangements (52, 53) can be used as significant variable for the tension of the thread-like winding material and so the reinforcement of the summation signal can be adjusted.

9. Sensor apparatus according to any of the preceding claims, **characterised in that** a further magnet (55) is provided as coupling magnet between the sensor arrangements (52, 53).

10. Sensor apparatus according to any of the preceding claims, **characterised in that** the coupling magnet (55) is formed rotatably with an axis of rotation (63) to which the guide elements (45, 46) are fastened.

11. Sensor apparatus according to any of the preceding claims, **characterised in that** an adjustable restoring element (57) is provided against the restoring force of which the coupling magnet (55) can be rotated.

12. Sensor apparatus according to any of the preceding claims, **characterised in that** a zero point stop (61) is provided for the mechanical zero point adjustment of the coupling magnet (55).

13. Feed device for feeding thread-like winding material, such as textile threads, fibres, wires or the like to corresponding processing machines, in particular for textile machines such as knitting and winding machines, **characterised in that** a sensor apparatus (30) according to any of the preceding claims is provided for electronic regulation of the material tension in the material take-off device (15).

## Revendications

1. Dispositif capteur (30), en particulier pour un dispositif de distribution de fil, comportant au moins un capteur Hall (41, 42),
**caractérisé en ce qu'**au moins un aimant (39, 40) relié à un guide de matière (45, 46) et à un élément de rappel mécanique (35, 36) est prévu à proximité du capteur Hall (41, 42).

2. Dispositif capteur selon la revendication 1,
**caractérisé en ce que**, comme élément de rappel, il est prévu un ressort à lames (35, 36).

3. Dispositif capteur selon une des revendications précitées,
**caractérisé en ce que**, comme guide de matière, il est prévu un oeillet de guidage (45, 46).

4. Dispositif capteur selon une des revendications précitées,
**caractérisé en ce que** deux agencements de capteur (52, 53) avec à chaque fois au moins un capteur Hall (41, 42) et à chaque fois au moins un aimant (39, 40) fixé à, à chaque fois, au moins un ressort à lames (35, 36), sont prévus.

5. Dispositif capteur selon une des revendications précitées,
**caractérisé en ce qu'**au moins deux aimants (39, 40) sont magnétiquement couplés.

6. Dispositif capteur selon une des revendications précitées,
**caractérisé en ce qu'**une protection magnétique autour des aimants (39, 40) et des capteurs Hall respectifs (41, 42) est prévue.

7. Dispositif capteur selon une des revendications précitées,
**caractérisé en ce que** la compensation à zéro ainsi que le réglage de la sensibilité peuvent être effectués de façon séparée pour chaque agencement de capteur (52, 53).

8. Dispositif capteur selon une des revendications précitées,
**caractérisé en ce que** les aimants (39, 40) ainsi que les capteurs Hall (41, 42) correspondants sont agencés de sorte que chaque agencement de capteur (52, 53), pour des déviations opposées, délivre un signal de tension de même signe, de sorte que le signal somme des deux agencements de capteur (52, 53) peut être utilisé comme grandeur significative pour la tension de la matière d'enroulement du type fil, et **en ce que** l'amplification du signal somme est réglable.

9. Dispositif capteur selon une des revendications précitées,
**caractérisé en ce qu'**un autre aimant (55) est prévu comme aimant de couplage entre les agencements de capteur (52, 53).

10. Dispositif capteur selon une des revendications précitées,
**caractérisé en ce que** l'aimant de couplage (55) est réalisé en pouvant tourner avec un axe de rotation (63) auquel sont fixés les éléments de guidage (45, 46).

11. Dispositif capteur selon une des revendications précitées,
**caractérisé en ce qu'**un élément de rappel réglable (57) est prévu contre la force de rappel duquel l'aimant de couplage (55) peut être tourné.

12. Dispositif capteur selon une des revendications précitées,
**caractérisé en ce qu'**une butée de point de référence (61) pour l'ajustage mécanique du point de référence de l'aimant de couplage (55) est prévue.

13. Dispositif de distribution pour distribuer de la matière d'enroulement du type fil, comme des fils textiles, des fibres, des fils métalliques ou analogues, vers des machines de traitement correspondantes, en particulier pour des machines textiles, comme des machines à tricoter et à bobiner,
**caractérisé en ce qu'**un dispositif capteur (30) pour le réglage électronique de la tension de matière dans le dispositif d'extraction de matière (15) selon une des revendications précitées est prévu.
